# EUROPEAN PATENT APPLICATION

(11) **EP 2 927 103 A1**
(43) Date of publication of application: **07.10.2015**
(21) Application number: 14162680.4
(22) Date of filing: 31.03.2014
(51) Int. Cl.: B62D 35/00

(54) **An air flow deflector device, use of an air flow deflector device and a large transport vehicle**

(71) Applicant: Volu Ventis Aps, 8600 Silkeborg (DK)
(72) Inventor: Hjort, Søren, 8600 Silkeborg (DK); Larsen, Helgi, 900 Vágur (FO)
(74) Representative: Patentgruppen

(57) **Abstract**

Disclosed is an air flow deflector device (1) for deflecting the air flow at the rear end (2) of a vehicle (3). The deflector device (1) comprises a number of vanes (4, 5, 6), wherein at least a first vane (4) and a second vane (5) is arranged in continuation of each other. At least the first vane (4) and the second vane (5) are angled in relation to each other to form a curved deflector profile (7, 8, 9) arranged to deflect the air flow in behind the vehicle (3) and a free space (10) is arranged between the neighbouring first vane (4) and second vane (5) to enable air flow between the first vane (4) and second vane (5).

Use of an air flow deflector device (1) and a large transport vehicle (3) comprising air flow deflector device (1) is also disclosed.

## Description

### Background of the invention

The invention relates to an air flow deflector device for deflecting the air flow at the rear end of a vehicle. The invention further relates to use of an air flow deflector device and a large transport vehicle comprising an air flow deflector device.

### Description of the Related Art

When a vehicle moves through a medium such as air or water it has to push the medium out of the way to move through it. And to ensure that as little energy as possible is used for this purpose, it is desirable that the medium flow around the moving vehicle is substantially laminar. Thus, for many years it has been known to make the front end of vehicles substantially pointy or in other ways aerodynamic to make the vehicle cut through the medium better and thus create as little turbulence as possible. However, when a large transport vehicle, such as a truck or a bus, moves through the air, a major component of the aerodynamic drag originates from so-called base drag, which is the partial vacuum being created by the hole being left by the blunt rear end of the vehicle as it moves through the air.

Base drag can be reduced by forming the vehicle with a boat-tail-like rear end. Such a transition of the main body will help in directing air into the evacuated area behind the moving vehicle. But forming the rear end of a truck or a bus pointy will increase the weight and the length of the vehicle substantially without adding capacity and in most cases it will complicate use of the vehicle - e.g. render rear end access to the vehicle impossible.

Thus, from WO 2012/045594 A1 it is known to arrange a spoiler along the upper rear edge of a truck. The spoiler is so arranged that it will direct the air flow along the roof of the vehicle into the evacuated space behind the vehicle. But such a spoiler will in itself create drag and turbulence and is therefore not particularly efficient if efficient at all.

An obj ect of the invention is therefore to provide for an advantageous technique for reducing base drag at the rear end of a vehicle.

### The invention

The invention provides for an air flow deflector device for deflecting the air flow at the rear end of a vehicle. The deflector device comprises a number of vanes, wherein at least a first vane and a second vane is arranged in continuation of each other. At least the first vane and the second vane are angled in relation to each other to form a curved deflector profile arranged to deflect the air flow in behind the vehicle and a free space is arranged between the neighbouring first vane and second vane to enable air flow between the first vane and second vane.

If a single conventional deflector device curves too much the risk of boundary layer separation and subsequent stall and tubular flow will increase. I.e. there is a physical limitation to how much air a single conventional deflector device of a given size (at a given air speed) can direct into the evacuated space behind a moving vehicle. However, by forming the deflector device of several vanes arranged in series it is possible to turn the flow more inwards behind the vehicle without creating flow separation and stall and substantially without increasing the overall size of the deflector device.

By forming a free space between each vane it is possible to create a flow from the pressure side of a first vane (as seen in the flow direction) to the suction side of a subsequent vane and thereby constantly "renew" the boundary layer. Since the boundary layer is constantly renewed it is also possible to turn the airflow more inwards into the evacuated space behind the vehicle without creating stall and without increasing the overall drag of the deflector device.

In an aspect of the invention, said deflector device comprises at least three vanes arranged in continuation of each other and angled in relation to each other.

Forming the deflector device by means of at least three vanes arranged in series is advantageous in that it enables a more curved deflector profile thus enabling more air to be directed into the evacuated space behind the moving vehicle.

In an aspect of the invention, said deflector device comprises more than one series of vanes forming more than one curved deflector profile and wherein said more than one curved deflector profile are arranged substantially in parallel in relation to the series arranged vanes.

Arranging more than one curved deflector profile outside each other in parallel is advantageous in that it hereby is possible to increase the overall efficiency of the deflector device without increasing the size of the deflector device much. I.e. by arranging two or more curved deflector profile outside each other it is possible to form a compact and efficient deflector device.

In an aspect of the invention, a first curved deflector profile and a second curved deflector profile of said more than one curved deflector profile are spaced apart by approximately between 0.1 and 20, preferably between 0.2 and 10 and most preferred between 0.5 and 5 times the chord length of said vanes.

If the deflector profiles are spaced too much apart the deflector device will become too big and if deflector profiles are arranged too close together the efficiency of the individual deflector profiles is reduced. Thus, the present distance ranges present an advantageous relationship between size and efficiency.

In an aspect of the invention, said deflector device comprises three or more series of vanes forming three or more parallel arranged curved deflector profiles.

Forming the deflector device with three or more parallel arranged curved deflector profiles is advantageous in that this will provided for a highly effective and very compact deflector device.

In an aspect of the invention, said first vane and said second vane are each formed with a leading edge arranged to substantially face towards a front end of said vehicle and a trailing edge arranged to substantially face away from said front end of said vehicle.

Hereby is achieved an advantageous embodiment of the invention.

It should be noticed that by the term "leading edge" is to be understood the point at the front of an airfoil that has maximum curvature i.e. typically substantially the front of a traditional airfoil moving normally through a medium.

It should be noticed that by the term "trailing edge" is to be understood the point of maximum curvature at the rear of the airfoil i.e. typically point where the suction surface of an airfoil intersects with the pressure surface.

In an aspect of the invention a trailing edge of said first vane is arranged to substantially overlap a leading edge of said second vane.

Making the trailing edge of the first vane overlap the leading edge of the second vane is advantageous in that the flow across the deflector device hereby is guided across the entire length of the device hereby increasing efficiency.

In an aspect of the invention, said first vane is angled between 0.5° and 85°, preferably between 1° and 50° and most preferred between 2° and 35° in relation to said second vane.

If the vanes are angled too much in relation to each other the risk of stall increases. And if the angle between the vanes is too little the efficiency of the deflector device is reduced. Thus, the present angle ranges present an advantageous relationship between functionality and efficiency.

In an aspect of the invention, the chord length of said vanes is between 1 and 20, preferably between 2 and 16 and most preferred between 3 and 10 times greater than the maximum height of said vanes.

If the vanes are too thin in relation to their chord length, the vanes becomes more fragile, and if the vanes are too thick in relation to their chord length the vanes will induce more drag. Thus, the present angle ranges present an advantageous relationship between durability and efficiency.

In an aspect of the invention, said first vane and said second vane are substantially identical in shape and size.

Forming the vanes substantially identical is advantageous in that it hereby reduces manufacturing cost and simplifies logistic and installation.

In an aspect of the invention, a cross sectional shape of said first vane and said second vane are formed as at least a part of an aerofoil.

Forming the vanes as aerofoils is advantageous in that the aerodynamic properties of aerofoils are well-defined in that the aerofoil shape will reduce drag of the deflector device while at the same time increasing efficiency.

In an aspect of the invention, said first vane and said second vane are formed by plate means provided with a cross sectional shape of at least a part of a suction side of an aerofoil.

Forming the vanes of plate material or plate-like material is advantageous in that it enables low production cost and a simple manufacturing process. Furthermore, by forming the plate-like material as at least a part of the suction side of an airfoil it is ensured that the vanes will efficiently guide the air flow in the desired direction.

The invention further provides for use of an air flow deflector device according to any of the previously mentioned air flow deflector devices for deflecting airflow in behind the rear end of a large transport vehicle such as a truck or a bus.

The base drag at the rear end of large transport vehicles is a significant factor in the overall fuel economy of the vehicle. At the same time the rear end design of large transport vehicles is often given by function and therefore has to be blunt. It is therefore advantageous to use a deflector device according to the present invention for deflecting airflow in behind the rear end of large transport vehicles.

The invention also provides for large transport vehicle comprising an air flow deflector device according to any of the previously mentioned air flow deflector devices arranged along at least a part of an upper rear edge of said vehicle.

Except for adding slightly to the overall height of the vehicle an air flow deflector devices arranged along the upper rear edge of the vehicle will not influence the function or use of the vehicle negatively and it is therefore advantageous to arrange deflector devices along at least a part of the upper rear edge of a vehicle.

In an aspect of the invention, said vehicle further comprises an air flow deflector device according to any of the previously mentioned air flow deflector devices arranged along at least a part of a rear side edge of said vehicle.

Arranging air flow deflector devices down along at least a part of the rear side edge of a vehicle is advantageous in that besides reducing the overall vehicle drag, the side mounted deflector devices can also aid in relieving the effects of cross wind by directing cross wind into the evacuated space from the pressure side of the vehicle.

### Figures

The invention will be described in the following with reference to the figures in which
- fig. 1: illustrates the air flow around the rear end of a moving prior art vehicle without any kind of rear spoiler, as seen from the side,
- fig. 2: illustrates the air flow around the rear end of a moving vehicle comprising deflector means, as seen from the side,
- fig. 3: illustrates a deflector device comprising a single deflector profile, as seen from the side,
- fig. 4: illustrates a deflector device comprising four parallel deflector profiles, as seen from the side,
- fig. 5: illustrates a deflector device comprising vanes of different size, as seen from the side,
- fig. 6: illustrates a deflector device comprising thin vanes, as seen from the side, and
- fig. 7: illustrates deflector devices arranged around the rear end of a vehicle, as seen in perspective.

### Detailed description of the invention

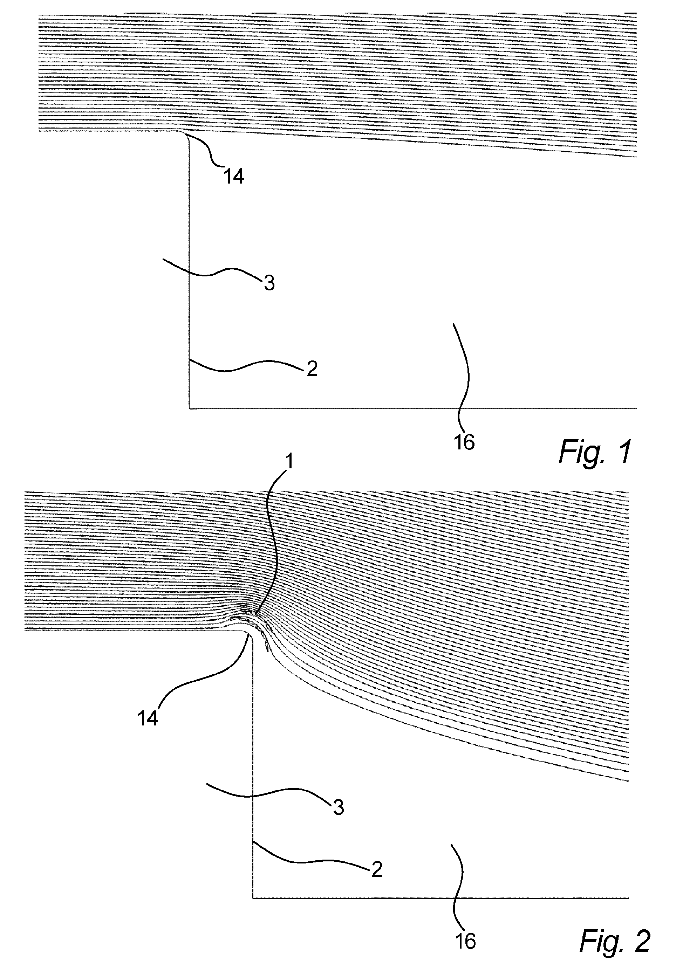

Fig. 1 illustrates the air flow around the rear end 2 of a moving prior art vehicle 3 without any kind of rear spoiler, as seen from the side.

When a vehicle 3 moves through the air it leaves a hole 16 behind the vehicle 3 which gradually will close again. In this hole 16 a partial vacuum is established creating a base drag on the rear end 2 of the vehicle 3. The impact of this base drag on the vehicle 3 (e.g. regarding fuel economy) is approximately equal to the size of the hole 16 and it is therefore advantageous if the passing air flow quickly can be directed into the hole 16 to reduce its size.

Fig. 2 illustrates the air flow around the rear end 2 of a moving vehicle 3 comprising deflector means 1, as seen from the side.

In this embodiment a deflector device 1 according to the present invention is mounted along the upper rear edge 14 of a moving vehicle 3. In this embodiment the deflector device 1 comprises two deflector profiles 7, 8 arranged in parallel so that they both will direct the air flow across the roof of the moving vehicle 3 into the evacuated space 16 behind the vehicle 3 to reduce base drag.

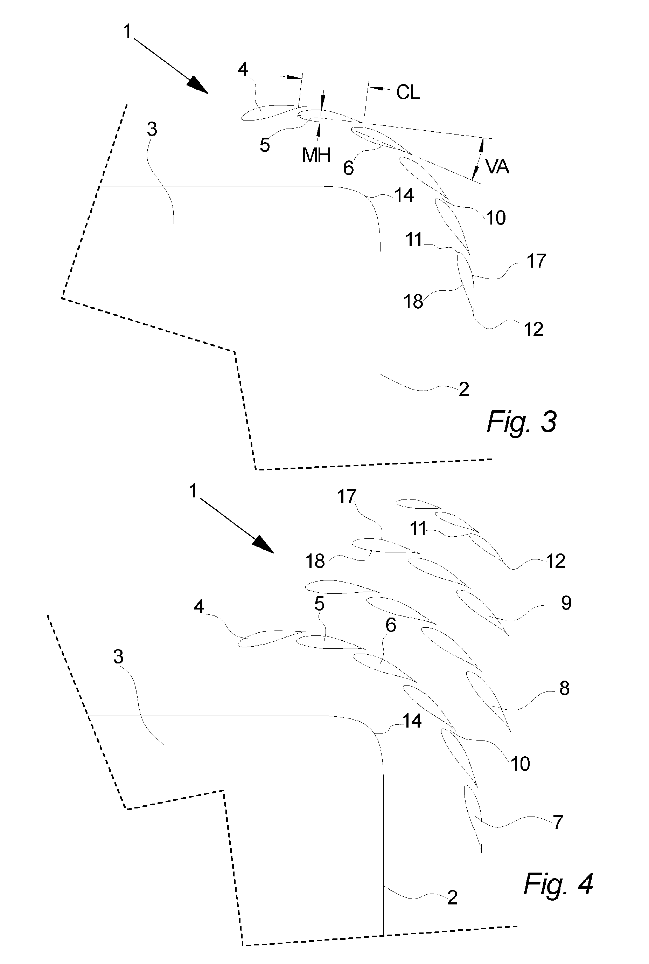

Fig. 3 illustrates a deflector device 1 comprising a single deflector profile 7, as seen from the side.

In this embodiment the single deflector profile 7 comprises a first vane 4 followed by a second vane 5 which in turn is followed by four further vanes 6. However in another embodiment the deflector profile 7 could comprise another number of vanes 4, 5, 6 such as two, three, four, five, eight, ten, twelve or even more e.g. dependent on the specific use, the number of parallel arranged deflector profiles 7, the design of the individual vanes 4, 5, 6 or other.

In this embodiment all the vanes 4, 5, 6 are arranged in continuation of each other, and all the vanes 4, 5, 6 are angled in relation to a preceding vane 4, 5, 6 so that all the vanes 4, 5, 6 together form a curved deflector profile 7 capable of efficiently deflecting the airflow in behind the vehicle 3. However, in another embodiment some of the vanes 4, 5, 6 could be spaced further apart so that it could be argued that all the vanes 4, 5, 6 are not arranged in continuation of each other. In another embodiment one or more of the vanes 4, 5, 6 could also be arranged parallel with (i.e. non-angled with) one or more further vanes 4, 5, 6 e.g. to better pass an obstacle or other.

In this embodiment a free space 10 is arranged between neighbouring vanes 4, 5, 6 to enable air flow between the vanes 4, 5, 6. In this embodiment all the vanes 4, 5, 6 are substantially uniformly spaced so that the free space 10 between the vanes 4, 5, 6 is of substantially uniform size throughout the length of the deflector profile 7. In this embodiment the free space between neighbouring vanes 4, 5, 6 is approximately equal to half the height of the vanes 4, 5, 6 but in another embodiment the gap 10 between the vanes 4, 5, 6 could be smaller or bigger e.g. dependent on the specific vane design, the specific use or other.

In this embodiment the vane angle VA between two neighbouring vanes 4, 5, 6 throughout the entire length of the deflector profile 7 is approximately 18° but in another embodiment the this angle VA could be smaller such as around 16°, 14°, 10° or even smaller or the angle VA could be bigger such as 22°, 25°, 30° or even bigger e.g. dependent on the specific vane design, the specific use or other. And in another embodiment the angle VA between neighbouring vanes 4, 5, 6 could vary throughout the length of the deflector profile 7.

Fig. 4 illustrates a deflector device 1 comprising four parallel deflector profiles 7, 8, 9, as seen from the side.

In this embodiment the deflector device 1 comprises four series of vanes 4, 5, 6 forming four curved deflector profiles 7, 8, 9 arranged in parallel beside each other, but in another embodiment the deflector device 1 could comprise fewer layers of deflector profiles 7, 8, 9 such as one, two or three or more layers of deflector profiles 7, 8, 9 such as five or six e.g. dependent on the specific use, the specific vane design, the specific profile design or other.

In this embodiment the first curved deflector profile 7 and the second curved deflector profile 8 are spaced apart by approximately the average chord length CL of the vanes 4, 5, 6 of the first deflector profile 7, the second curved deflector profile 8 and the next curved deflector profile 9 are also spaced apart by approximately the chord length (CL) of the vanes 4, 5, 6 of the second deflector profile 8 and so on. However, in another embodiment two or more of the deflector profiles 7, 8, 9 could be arranged closer together e.g. by 0.2, 0.4 or 0.7 times the average chord length CL of the vanes 4, 5, 6 of the inner deflector profile, two or more of the deflector profiles 7, 8, 9 could be arranged further apart e.g. by 2, 3 or 4 times the average chord length CL of the vanes 4, 5, 6 of the inner deflector profile or different deflector profiles 7, 8, 9 could be arranged at different distances to neighbouring deflector profiles 7, 8, 9.

It should be noticed that by the term "chord" is to be understood a straight line connecting the leading edge 11 and trailing edge 12 of the airfoil i.e. the distance between the front and back of the vane 4, 5, 6, measured in the direction of the normal airflow.

For each layer of curved deflector profiles 7, 8, 9 to be efficient they have to be spaced apart by a substantial distance. Thus, if the deflector device 1 comprises too many layer of curved deflector profiles 7, 8, 9 - such as more than five layers, more than seven layers or even more layers - the outer layers 9 will have to be arranged so far from the evacuated space 16 behind the vehicle 3 that they become less efficient. Furthermore, for an upper rear edge applied embodiment of the invention, with many layers the deflector device 1 could become so high that it could influence the capacity of the vehicle 3 due to the total height of the deflector device 1.

In this embodiment the vanes 4, 5, 6 of the first deflector profile 7 are all substantially identical in shape and size, the vanes 4, 5, 6 of the second deflector profile 8 are all substantially identical in shape and size and so on while all the vanes 4, 5, 6 of the first deflector profile 7 are slightly bigger than all the vanes 4, 5, 6 of the second deflector profile 8 and so on outwards. However, in another embodiment all the vanes 4, 5, 6 of all the deflector profiles 7, 8, 9 could be substantially identical in shape and size or all or some of the vanes 4, 5, 6 of some or all the deflector profiles 7, 8, 9 could vary in shape and/or size.

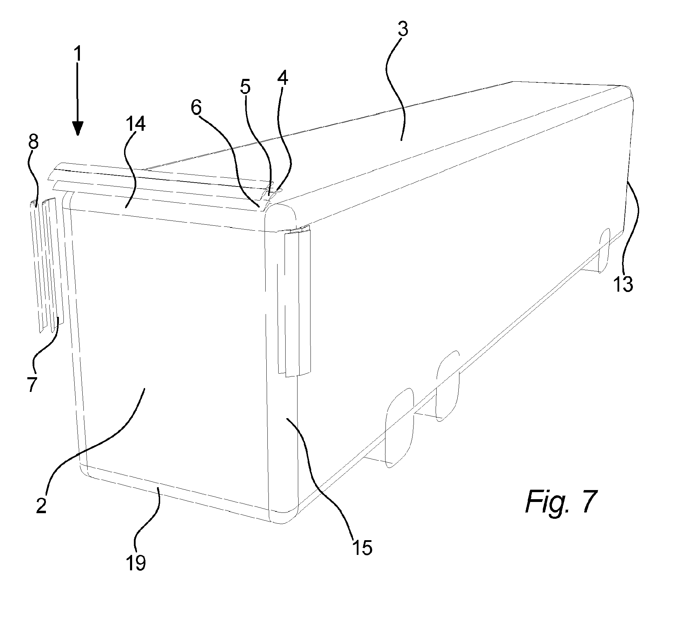

In this embodiment all the vanes 4, 5, 6 are formed as airfoils with a leading edge 11 arranged to substantially face towards the front end 13 (see fig. 7) of the vehicle 3 and a trailing edge 12 arranged to substantially face in the opposite direction. However, in another embodiment some or all the vanes 4, 5, 6 could be arranged differently e.g. by making the leading edge 11 of some or all the vanes 4, 5, 6 face vertically upwards or even away from the front end 13 of the vehicle 3.

Forming the vanes 4, 5, 6 as airfoils entails that each vane (arranged with the leading edge facing into the direction of normal air flow) comprises a suction surface 17 (a.k.a. the upper surface) which is generally associated with higher air velocity and lower static pressure and a pressure surface 18 (a.k.a. lower surface) which has a comparatively higher static pressure than the suction surface 17.

In this embodiment the trailing edge 12 of the first vane 4 is arranged to overlap the leading edge 11 of the second vane 5, the trailing edge 12 of the second vane 5 is arranged to overlap the leading edge 11 of the further vane 6 and so on. However, in another embodiment some or all of the leading edges 11 could be arranged to overlap the trailing edges 11.

Also, in this embodiment the trailing edge 12 of a preceding vane 4, 5, 6 is arranged to overlap the suction surface side 17 of a succeeding vane 4, 5, 6 so that an air flow from the pressure surface side 18 of a preceding vane 4, 5, 6 easily can be channelled to the suction surface side 17 of a succeeding vane 4, 5, 6 through the free space 10 substantially without creating any kind of turbulence - thus, the boundary layer of the vanes 4, 5, 6 is renewed for each vane 4, 5, 6 thus enabling that that the deflector profile 7, 8, 9 can be formed with a sharper curvature hereby enabling that a deflector device 1 of a given size can deflect more air further into the evacuated space behind the moving vehicle 3.

However, in another embodiment the trailing edge 12 of some or all preceding vanes 4, 5, 6 could be arranged to overlap the pressure surface side 18 of a succeeding vane 4, 5, 6.

In this embodiment the chord length CL of a vane 4, 5, 6 is approximately 5.5 times bigger than the maximum height MH of that vane 4, 5, 6 but in another embodiment the chord length CL of a vane 4, 5, 6 could be bigger in relation to the maximum height MH of that vane 4, 5, 6 such as 6.5, 8, 10 times bigger or even bigger or the chord length CL of a vane 4, 5, 6 could be smaller in relation to the maximum height MH of that vane 4, 5, 6 such as only 5, 4, 2 times bigger or even smaller.

The embodiments disclosed in figs. 2-7 all show the deflector devices 1 arranged at the rear end 2 of a vehicle 3 but it is not specifically disclosed how the deflector device 1 is attached to the vehicle 3. In the embodiment disclosed in fig. 4 all the vanes 4, 5, 6 of the first deflector profile 7 are connected to each other, all the vanes 4, 5, 6 of the second deflector profile 8 are connected to each other and so on. And in this embodiment the first deflector profile 7 is connected the vehicle 3 by means of two symmetrically arranged brackets (not shown) which extends further outwards to also connect the second deflector profile 8 and the further deflector profiles 9 to the vehicle 3. However it is evident to the skilled person that the vanes 4, 5, 6 can be interconnected or connected to the vehicle 3 in a multitude of ways that are well known in the art.

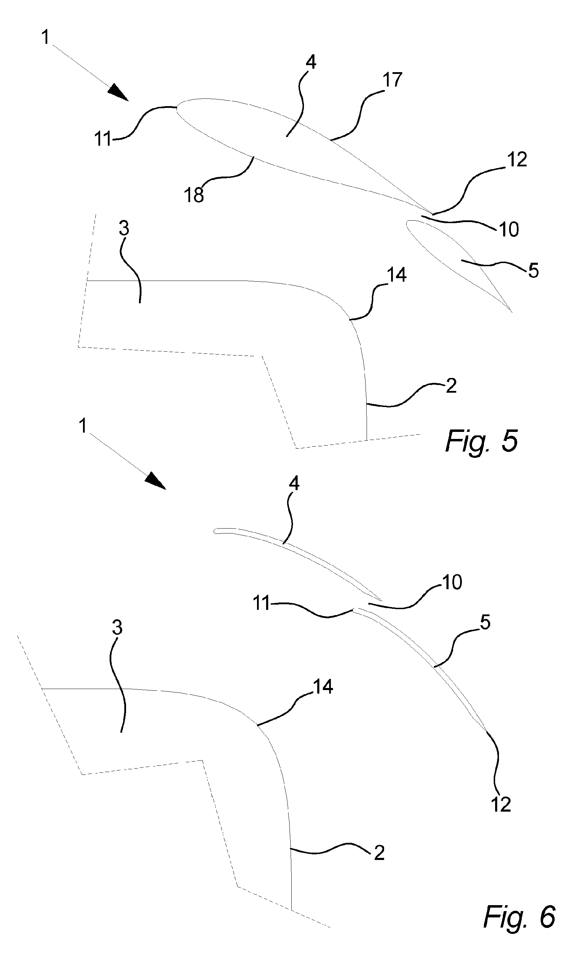

Fig. 5 illustrates a deflector device 1 comprising vanes 4, 5, 6 of different size, as seen from the side.

In this embodiment the vanes 4, 5 of the deflector device 1 is formed with drastically different size but in another embodiment the size of the vanes 4, 5, 6 could also vary slightly throughout the deflector device 1 e.g. dependent on specific use, location of the vanes 4, 5, 6 or other.

Fig. 6 illustrates a deflector device 1 comprising thin vanes 4, 5, 6, as seen from the side.

The vanes 4, 5, 6 disclosed in figs. 2, 3, 4, 5 and 7 are all formed as airfoils but in this embodiment the vanes 4, 5 are formed as only part of an airfoil in that each vane 4, 5 of this deflector device 1 are formed as thin shells substantially resembling the suction side 17 of an airfoil. However, in another embodiment the cross-section of one or more of the vanes 4, 5, 6 in a deflector device 1 could be flat, flat cambered, partly airfoil shaped, fully airfoil shaped or have another geometry e.g. suited to the specific use, the production method, material choice or other.

In this embodiment the vanes 4, 5 are formed by a plate substantially bend into the shape of the suction side 17 of an airfoil. The chord length CL of the vanes 4, 5 formed by a plate-like material is in this case approximately is 70 times bigger than the thickness of the plate but this ratio could be bigger or smaller e.g. dependent on the specific plate material, the production method, the specific use or other.

Fig. 7 illustrates deflector devices 1 arranged around the rear end 2 of a vehicle 3, as seen in perspective.

In this embodiment the deflector devices 1 are arranged both at the upper rear edge 14 and both rear side edges 15 of a large bus 3. However, in another embodiment a deflector device 1 could also be arranged along the bottom edge 19 of a given vehicle 3.

In this embodiment the deflector devices 1 arranged at the rear side edges 15 only extend down to approximately 2 meters above ground level, in that many countries traffic laws outlaw objects protruding from the side of trucks or busses up to a certain level above the ground. However, in another embodiment the deflector devices 1 could extend all the way down one or both rear side edges 15.

In this embodiment the deflector devices 1 are mounted on a bus 3 but in another embodiment the deflector devices 1 could be used in relation with other forms of large commercial transport vehicles such as a truck, a train or a trailer, it could be used in relation with other types of large transport vehicles such as a caravan, a mobile home, a camper, containers etc. In fact the deflector device 1 according to the present invention could advantageously be used in relation with any form of substantially blunt-ended or at least partly blunt-ended vehicle or vessel even at the rear end of at least partly blunt-ended ships, boats, barges or other seafaring vessels both above and below the waterline.

The invention has been exemplified above with reference to specific examples of designs and embodiments of deflector devices 1, vehicles 3, vanes 4, 5, 6, deflector profiles 7, 8, 9 etc. However, it should be understood that the invention is not limited to the particular examples described above but may be designed and altered in a multitude of varieties within the scope of the invention as specified in the claims.

### List

- 1.: Air flow deflector device
- 2.: Rear end of vehicle
- 3.: Vehicle
- 4.: First vane
- 5.: Second vane
- 6.: Further vane
- 7.: First curved deflector profile
- 8.: Second curved deflector profile
- 9.: Further curved deflector profile
- 10.: Free space
- 11.: Leading edge
- 12.: Trailing edge
- 13.: Front end of vehicle
- 14.: Upper rear edge
- 15.: Rear side edge
- 16.: Hole behind vehicle
- 17.: Suction surface
- 18.: Pressure surface
- 19.: Rear bottom edge
- CL.: Chord length
- VA.: Vane angle
- MH.: Maximum height of vane

## Claims

1. An air flow deflector device (1) for deflecting the air flow at the rear end (2) of a vehicle (3), said deflector device (1) comprising a number of vanes (4, 5, 6), wherein at least a first vane (4) and a second vane (5) is arranged in continuation of each other, wherein at least said first vane (4) and said second vane (5) are angled in relation to each other to form a curved deflector profile (7, 8, 9) arranged to deflect said airflow in behind said vehicle (3) and wherein a free space (10) is arranged between said neighbouring first vane (4) and second vane (5) to enable air flow between said first vane (4) and second vane (5).

2. An air flow deflector device (1) according to claim 1, wherein said deflector device (1) comprises at least three vanes (4, 5, 6) arranged in continuation of each other and angled in relation to each other.

3. An air flow deflector device (1) according to claim 1 or 2, wherein said deflector device (1) comprises more than one series of vanes (4, 5, 6) forming more than one curved deflector profile (7, 8, 9) and wherein said more than one curved deflector profile (7, 8, 9) are arranged substantially in parallel in relation to the series arranged vanes (4, 5, 6).

4. An air flow deflector device (1) according to claim 3, wherein a first curved deflector profile (7) and a second curved deflector profile (8) of said more than one curved deflector profile (7, 8, 9) are spaced apart by approximately between 0.1 and 20, preferably between 0.2 and 10 and most preferred between 0.5 and 5 times the chord length (CL) of said vanes (4, 5, 6).

5. An air flow deflector device (1) according to claim 3 or 4, wherein said deflector device (1) comprises three or more series of vanes (4, 5, 6) forming three or more parallel arranged curved deflector profiles (7, 8, 9).

6. An air flow deflector device (1) according to any of the preceding claims, wherein said first vane (4) and said second vane (5) are each formed with a leading edge (11) arranged to substantially face towards a front end (13) of said vehicle (3) and a trailing edge (12) arranged to substantially face away from said front end (13) of said vehicle (3).

7. An air flow deflector device (1) according to claim 6, wherein a trailing edge (12) of said first vane (4) is arranged to substantially overlap a leading edge (11) of said second vane (5).

8. An air flow deflector device (1) according to any of the preceding claims, wherein said first vane (4) is arranged in a vane angle (VA) between 0.5° and 85°, preferably between 1° and 50° and most preferred between 2° and 35° in relation to said second vane (5).

9. An air flow deflector device (1) according to any of the preceding claims, wherein said first vane (4) and said second vane (5) are substantially identical in shape and size.

10. An air flow deflector device (1) according to any of the preceding claims, wherein a cross sectional shape of said first vane (4) and said second vane (5) are formed as at least a part of an aerofoil.

11. An air flow deflector device (1) according to claim 10, wherein said first vane (4) and said second vane (5) are formed by plate means provided with a cross sectional shape of at least a part of a suction side of an aerofoil.

12. Use of an air flow deflector device (1) according to any of the preceding claims for deflecting airflow in behind the rear end (2) of a large transport vehicle (3), such as a truck or a bus.

13. A large transport vehicle (3) comprising air flow deflector device (1) according to any of claims 1-11 arranged along at least a part of an upper rear edge (14) of said vehicle (3).

14. A large transport vehicle (3) according to claim 13, wherein said vehicle (3) further comprises an air flow deflector device (1) according to any of claims 1-11 arranged along at least a part of a rear side edge (15) of said vehicle (3).
